# FASCICULE DE BREVET EUROPEEN

(11) **EP 0 696 099 B1**
(45) Date de publication et mention de la délivrance du brevet: **17.09.1997**
(21) Numéro de dépôt: 95401679.6
(22) Date de dépôt: 12.07.1995
(51) Int. Cl.: H02G 3/06

(54) **Canalisation électrique à zone d'éclissage étanche**
Kabelkanal mit dichten Verbindungslaschen
Cable duct with sealed connection plate

(30) Priorité: 02.08.1994 FR 9409677
(43) Date de publication de la demande: 07.02.1996
(73) Titulaire: SCHNEIDER ELECTRIC SA, 92100 Boulogne Billancourt (FR)
(72) Inventeur: Jego, Gérard, F-21470 Brazey en Plaine (FR); Thierry, Jean-Pierre, F-21560 Arc-sur-Tille (FR); Nourry, Daniel, F-21000 Dijon (FR); Lebeau, Jean-Claude, F-21490 Varois (FR); Normand, Philippe, F-21800 Chevigny (FR)
(74) Mandataire: Carias, Alain

(56) Documents cités:
- FR-A- 2 647 525
- US-A- 4 349 220

## Description

La présente invention concerne une canalisation électrique préfabriquée du genre composable par aboutement de tronçons élémentaires d'enveloppe, chaque tronçon logeant un ensemble conducteur élémentaire constitué par des conducteurs électriques parallèles.

Une telle canalisation comporte, pour assembler entre eux les divers tronçons d'enveloppe, des dispositifs d'éclissage mécanique généralement constitués par des flasques destinés à recouvrir les extrémités des tronçons au voisinage de leur plan de joint, les flasques étant susceptibles d'être appliqués sur l'enveloppe et/ou serrés mutuellement par des vis ou des boulons qui traversent les parois de l'enveloppe.

Il est essentiel de chercher à améliorer l'étanchéité dans la région d'éclissage, pour protéger les conducteurs électriques et leurs éléments de connexion des risques d'introduction d'eau. La traversée de l'enveloppe de la canalisation par les boulons d'éclissage pose à cet égard un problème.

L'invention a pour but d'assurer par des moyens simples l'étanchéité d'une région d'éclissage où sont disposés des flasques boulonnés. Elle a pour autre but de simplifier en combinaison la traversée étanche des boulons et le positionnement des conducteurs dans la région d'éclissage.

Selon l'invention, dans une canalisation du type précédemment décrit, des colonnettes tubulaires sont situées à l'intérieur de l'enveloppe, près des extrémités des tronçons d'enveloppe, pour le passage des vis de serrage des flasques d'éclissage, chaque colonnette comprenant au moins une ouverture débouchante conformée pour recevoir de façon étanche le bord d'un orifice coaxial ménagé dans l'enveloppe.

De préférence, l'ouverture débouchante est évasée et le bord d'orifice de l'enveloppe y est engagé à force, par exemple par estampage ou emboutissage, sans nécessiter de joint spécifique d'étanchéité ; cette ouverture évasée peut également servir à positionner le flasque correspondant.

La colonnette fait avantageusement partie d'un plot formant de plus un support pour les conducteurs et agencé à cet effet pour porter et positionner, avec jeu et limitation de débattement axial, un ensemble conducteur ou deux ensembles conducteurs disposés symétriquement.

La description qui suit est faite en regard des dessins annexés pour expliciter les caractéristiques de l'invention et les résultats qu'elle permet d'obtenir.
- la figure 1 montre en élévation latérale une canalisation de distribution électrique préfabriquée;
- la figure 2 est une vue éclatée d'un dispositif d'éclissage conforme à l'invention ;
- la figure 3 montre en élévation à plus grande échelle la région d'éclissage à l'extrémité d'un tronçon d'enveloppe;
- la figure 4 est une vue agrandie en coupe selon la ligne IV-IV de la figure 3.

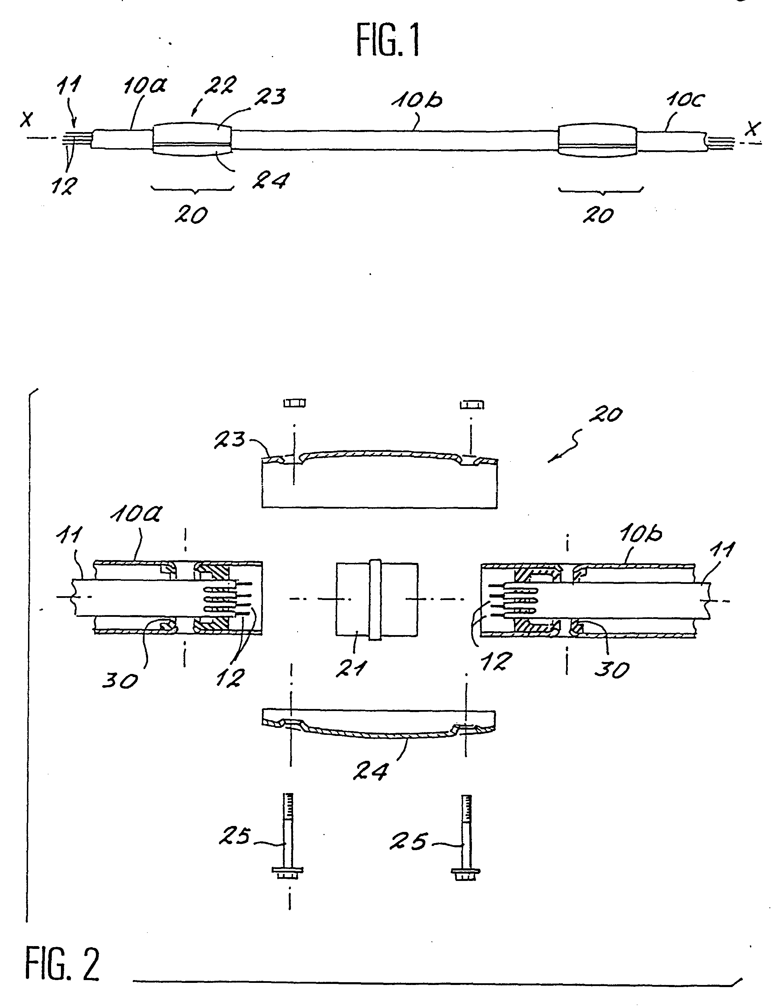

La canalisation préfabriquée de distribution électrique qui est représentée sur la figure 1 comprend plusieurs tronçons d'enveloppe 10a, 10b, 10c de forme tubulaire à contour fermé, ces tronçons s'étendant selon un axe longitudinal X. Chaque tronçon d'enveloppe renferme un ou deux ensembles conducteurs 11 dont chacun est constitué par plusieurs conducteurs électriques parallèles 12 de puissance et le cas échéant de transmission de signaux ; ces conducteurs sont des barres ou des câbles indépendants ou bien se présentent sous forme de nappe de câbles. Les divers tronçons d'enveloppe 10 sont assemblés par aboutement à leurs extrémités et mise en oeuvre de dispositifs d'éclissage 20 ; ceux-ci assurent d'une part une connexion des ensembles conducteurs respectifs et d'autre part une liaison mécanique rigide des tronçons.

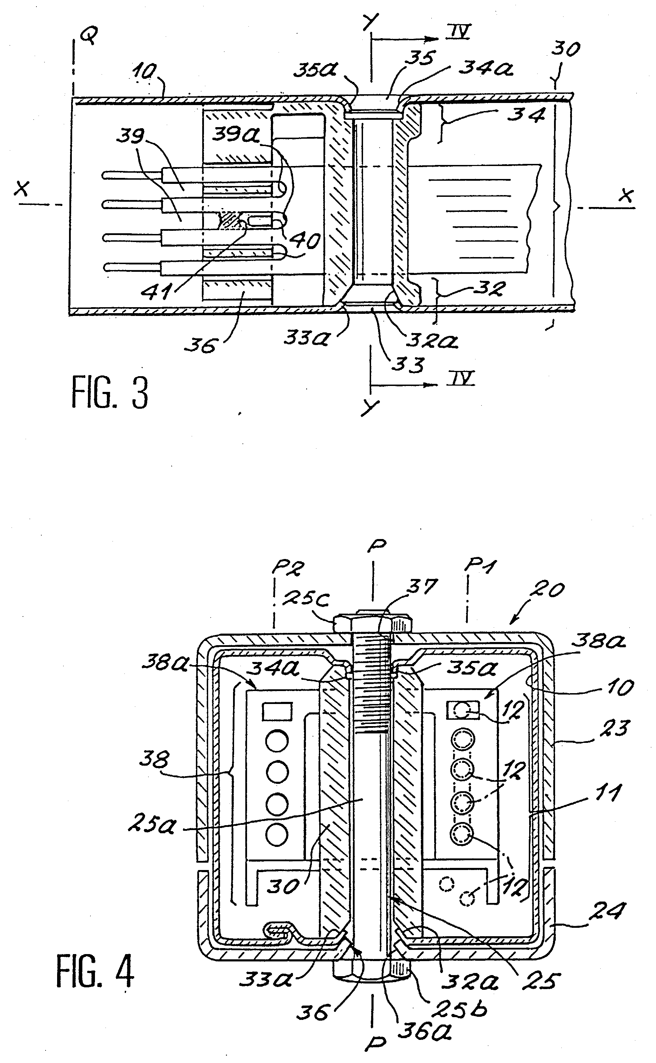

Un tel dispositif d'éclissage 20 comprend d'une part une pièce de forme générale prismatique 21 (figure 2) contenant des ponts de contact non représentés qui servent à connecter les extrémités nues des conducteurs respectifs 12 des deux nappes 11 des tronçons d'enveloppe à joindre 10a, 10b ; le dispositif 20 comprend d'autre part un organe 22 d'assemblage mécanique des tronçons conçu pour couvrir de manière étanche le plan de joint des tronçons. Cet organe est constitué de deux flasques 23, 24, par exemple à section en U, serrés sur l'enveloppe et assemblés entre eux au moyen de boulons de serrage 25. A la pièce d'éclissage 21 sont associés des éléments non illustrés assurant l'étanchéité de l'assemblage de cette pièce dans les extrémités des tronçons d'enveloppe.

Des colonnettes cylindriques tubulaires 30 sont montées verticalement - avec leur axe perpendiculaire à l'axe longitudinal X de la canalisation - à l'intérieur des tronçons d'enveloppe 10 et près des extrémités de ceux-ci, pour assurer une traversée étanche des boulons de serrage 25. Les axes des colonnettes sont situés dans le plan médian longitudinal P de la canalisation.

Chaque colonnette 30 présente une partie principale tubulaire 31 débouchant, à ses extrémités inférieure 32 et supérieure 34, vers l'extérieur de l'enveloppe. L'extrémité inférieure 32 présente à cet effet une ouverture 32a évasée, par exemple tronconique, dans laquelle est engagé à force, par exemple serti, le rebord 33a d'un orifice 33 prévu dans la face inférieure de l'enveloppe ; l'extrémité supérieure 34 de la colonnette présente une ouverture cylindrique 34a de diamètre supérieur au diamètre interne du conduit de la partie tubulaire 31, de manière à permettre l'emboutissage, à l'aplomb du conduit, du rebord 35a d'un orifice 35 ménagé dans la face supérieure de l'enveloppe. Sur le rebord inférieur 33a de l'enveloppe peut être centrée une forme conique ou autre, par exemple emboutie 36a, et ménagée au bord d'un orifice 36 du flasque inférieur d'éclissage 24. Le flasque supérieur 23 comporte également un orifice 37 de sorte que le boulon de serrage 25 peut être engagé librement par sa tige 25a, qui traverse les orifices 36, 33, l'ouverture 32a, la partie tubulaire 31, l'ouverture 34a et les orifices 35, 37, jusqu'à butée de sa tête 25b contre le flasque inférieur 24, puis serrage de son écrou 25c contre le flasque supérieur 23. Il convient d'observer que l'ensemble peut ainsi être centré sur l'axe vertical Y de l'orifice inférieur 33 de l'enveloppe.

La colonnette fait partie d'un plot 38 en matière plastique qui forme un organe de support pour l'extrémité de l'ensemble conducteur 11 au voisinage du plan de joint Q des tronçons d'enveloppe 10 ; le plot comprend, des deux côtés de la colonnette (figure 4), deux jeux d'ouvertures 38a alignées selon des plans respectifs P1, P2 parallèles au plan P pour le passage des conducteurs 12, chaque jeu d'ouvertures étant destiné au passage d'une nappe 11. La nappe est engagée dans le plot avec une légère liberté de déplacement axial adaptée aux tolérancements. Les parties gainées des extrémités des conducteurs 12 sont séparées entre elles à cet effet par des intervalles 39 délimités en bout par des parois 39a séparées d'éléments de retenue bilatérale 40, 41 du plot par des jeux adéquats ; cette disposition permettant de limiter le débattement axial de la nappe lors de la fabrication de la canalisation et lors de l'éclissage électrique des tronçons.

Le dispositif selon l'invention permet ainsi à la fois d'améliorer l'étanchéité de la canalisation dans la zone d'éclissage et de maintenir les nappes de conducteurs dans la position souhaitée.

## Revendications

1. Canalisation électrique préfabriquée composable par aboutement de tronçons élémentaires d'enveloppe, chaque tronçon logeant un ensemble conducteur élémentaire constitué par des conducteurs électriques parallèles, la canalisation comportant des dispositifs d'éclissage mécanique constitués par des flasques destinés à recouvrir les extrémités des tronçons d'enveloppe au voisinage de leurs plans de joint, les flasques étant susceptibles d'être serrés par des boulons,
caractérisé par le fait que
- des colonnettes tubulaires (30) sont situées à l'intérieur de l'enveloppe (10), près des extrémités des tronçons d'enveloppe, pour le passage des vis (25) de serrage des flasques d'éclissage (23, 24),
- chaque colonnette comprend au moins une ouverture débouchante (32a, 34a) conformée pour recevoir de façon étanche le bord (33a, 35a) d'un orifice coaxial (33, 35) ménagé dans l'enveloppe.

2. Canalisation selon la revendication 1, caractérisé par le fait que l'ouverture débouchante (32a, 34a) est évasée et que le bord (33a, 35a) d'orifice de l'enveloppe y est engagé à force.

3. Canalisation selon la revendication 2, caractérisé par le fait que l'ouverture évasée (32a) sert au centrage d'une forme (36a) ménagée au bord d'un orifice (36) d'un flasque d'éclissage (24).

4. Canalisation selon la revendication 1, caractérisé par le fait que la colonnette (30) est solidaire d'un plot de support (38) agencé pour porter et positionner au moins un ensemble conducteur (11) au voisinage du plan de joint (Q) des tronçons d'enveloppe (10).

5. Canalisation selon la revendication 4, caractérisé par le fait que le plot de support (38) loge avec jeu l'ensemble conducteur (11) et comprend des éléments de retenue (40, 41) limitant le déplacement axial de l'ensemble conducteur.

6. Canalisation selon la revendication 4, caractérisé par le fait que la colonnette (30) est située dans un plan médian (P) de la canalisation et que le plot de support (38) est agencé pour loger deux ensembles conducteurs (11) symétriquement par rapport au plan médian.

## Patentansprüche

1. Vorgefertigter Kabelkanal, zusammensetzbar durch Aneinanderfügung von elementaren Mantelabschnitten, wobei jeder Abschnitt eine elementare Leitereinheit aufnimmt, die aus parallelen Stromleitern besteht, wobei der Kanal aus Flanschen bestehende, mechanische Verbindungsvorrichtungen umfasst, die die Enden der Mantelabschnitte in der Nachbarschaft ihrer Teilungsebenen abdecken, wobei die Flansche von Bolzen befestigt werden können,
dadurch gekennzeichnet, dass
- innerhalb des Mantels (10), in der Nähe der Enden der Mantelabschnitte, rohrförmige Säulchen (30) für die Durchführung der Befestigungsschrauben (25) der Verbindungsflansche (23, 24) angeordnet sind,
- wobei jedes Säulchen mindestens eine Mündungsöffnung (32a, 34a) umfasst, die für eine dichte Aufnahme des Rands (33a, 35a) einer im Mantel vorgesehenen koaxialen Öffnung (33, 35) ausgebildet ist.

2. Kanal nach Anspruch 1, dadurch gekennzeichnet, dass die Mündungsöffnung (32a, 34a) konisch erweitert ist und dass der Rand (33a, 35a) der Öffnung des Mantels dort eingedrückt wird.

3. Kanal nach Anspruch 2, dadurch gekennzeichnet, dass die konisch erweiterte Öffnung (32a) zum Zentrieren einer am Rand einer Öffnung (36) eines Verbindungsflansches (24) vorgesehenen Form (36a) dient.

4. Kanal nach Anspruch 1, dadurch gekennzeichnet, dass das Säulchen (30) Bestandteil eines Tragklotzes (38) ist, der zum Tragen und Positionieren mindestens einer Leitereinheit (11) in der Nachbarschaft der Teilungsebene (Q) der Abschnitte des Mantels (10) ausgelegt ist.

5. Kanal nach Anspruch 4, dadurch gekennzeichnet, dass der Tragklotz (38) die Leitereinheit (11) mit Spiel aufnimmt und Rückhaltelemente (40, 41) umfasst, die das axiale Verschieben der Leitereinheit begrenzen.

6. Kanal nach Anspruch 4, dadurch gekennzeichnet, dass das Säulchen (30) auf einer mittleren Ebene (P) des Kanals angeordnet ist und dass der Tragklotz (38) so ausgelegt ist, dass er zwei Leitereinheiten (11) symmetrisch in Bezug auf die mittlere Ebene aufnehmen kann.

## Claims

1. Prefabricated electrical trunking adapted to be assembled by butt jointing unit enclosure sections each accommodating a unit conductor assembly comprising parallel electrical conductors, the trunking including mechanical fishplate devices comprising flanges adapted to cover the ends of the enclosure sections near the plane of the joint, the flanges being adapted to be clamped by bolts,
characterised in that
- tubular spacers (30) are disposed inside the enclosure (10) near the ends of the enclosure sections for screws (25) for clamping the fishplate flanges (23, 24),
- each spacer includes at least one opening (32a, 34a) shaped to receive in a watertight manner the edge (33a, 35a) of a coaxial orifice (33, 35) in the enclosure.

2. Trunking according to claim 1 characterised in that the opening (32a, 34a) is flared and the edge (33a, 35a) of the orifice in the enclosure is a force fit therein.

3. Trunking according to claim 2 characterised in that the flared opening (32a) centres a shaped portion (36a) formed at the edge of an orifice (36) in a fishplate flange (24).

4. Trunking according to claim 1 characterised in that the spacer (30) is attached to a support member (38) adapted to support and to locate at least one conductor assembly (11) near the plane (Q) of the joint between enclosure sections (10).

5. Trunking according to claim 4 characterised in that the support member (38) accommodates the conductor assembly (11) with play and includes retaining members (40, 41) to limit axial displacement of the conductor assembly.

6. Trunking according to claim 4 characterised in that the spacer (30) is in a median plane (P) of the trunking and the support member (38) is adapted to house two conductor assemblies (11) symmetrical about the median plane.
